# EUROPEAN PATENT APPLICATION

(11) **EP 2 381 245 A2**
(43) Date of publication of application: **26.10.2011**
(21) Application number: 11162290.8
(22) Date of filing: 13.04.2011
(51) Int. Cl.: G01N 21/89

(54) **Image inspection device and image forming apparatus**

(30) Priority: 20.04.2010 JP 2010096931; 20.07.2010 JP 2010163261
(71) Applicant: Ricoh Company Ltd., Tokyo 143-8555 (JP)
(72) Inventor: Nakashige, Fumihiro, Tokyo 143-8555 (JP); Kojima, Keiji, Tokyo 143-8555 (JP); Itoh, Hitoshi, Tokyo 143-8555 (JP)
(74) Representative: Leeming, John Gerard

(57) **Abstract**

An image inspection device inspects an image formed on an object. The image inspection device includes a first illuminating unit illuminating the object from an oblique direction with a first illuminating light; an imaging unit receiving specular reflection light of the first illuminating light from the object; and a focusing unit focusing the specular reflection light on the imaging unit. The image inspection device is configured to inspect the image based on the intensity of the specular reflection light received by the imaging unit. The first illuminating unit includes light-emitting elements that are directed such that the specular reflection light from the object enters a pupil of the focusing unit.

## Description

### BACKGROUND OF THE INVENTION

### 1. Field of the Invention

A certain aspect of this disclosure relates to an image inspection device and an image forming apparatus.

### 2. Description of the Related Art

In an electrophotographic image forming apparatus, a toner image formed on paper is fused onto the paper by a fusing unit. Therefore, normally, the gloss of the paper (or the image) depends on the amount of toner adhering to the paper. However, even when a toner image is accurately formed on paper (or the distribution of the amount of toner is accurately represented on the paper), the toner image may be unevenly fused onto the paper due to, for example, a problem of a fusing unit of an image forming apparatus and the unevenness in the fusing often results in stripes on the fused toner image.

Even when a toner image is unevenly fused, the image density distribution of the toner image may not be affected. However, stripes resulting from the variation in gloss may be observed on the toner image from oblique directions. The stripes represent image defects and are called "fuser stripes". Meanwhile, when an electrophotographic image forming apparatus is used as a digital printing press, it is often necessary to improve the gloss of an output image by, for example, applying transparent toner to the output image or using high gloss paper.

For the above reasons, there is a demand for an image inspection device than can inspect an image output from an electrophotographic image forming apparatus on demand. Such an image inspection device preferably includes a function for measuring the gloss distribution in the entire area of an output image in addition to a function for measuring the density distribution of the output image. The gloss of an object is measured, for example, by illuminating the object at a predetermined illuminating angle and by measuring the intensity of specular reflection light from the object. In this case, the incident angle and the reflection angle of the light are the same, i.e., they are the same as the illuminating angle, and the illuminating angle is determined depending on the object.

Meanwhile, images to be inspected by an image inspection device may be formed on various types of paper. To reduce the variation in measurements resulting from the difference in the type of paper, a reduction optical system is more preferably used than a 1X optical system to scan an image. This is because the scan resolution and the focus of a 1X optical system change depending on the imaging distance that varies according to the thickness of paper. Meanwhile, the influence of the thickness of paper on a reduction optical system is less significant.

Here, if a contact glass is provided between an imaging system and an output image when optically detecting the gloss distribution of the output image, the detection results are greatly influenced by a gloss component of the surface reflection light from the contact glass. Therefore, it is not preferable to use a contact glass to make the imaging distance constant. This also makes it difficult to use a 1X optical system for an image inspection device.

Technologies for measuring the gloss distribution of an output image are disclosed, for example, in Japanese Laid-Open Patent Publication No. 2006-284550 and Japanese Laid-Open Patent Publication No. 2000-123152.

### SUMMARY OF THE INVENTION

In an aspect of this disclosure, there is provided a device for inspecting an image formed on an object. The device includes a first illuminating unit illuminating the object from an oblique direction with a first illuminating light; an imaging unit receiving specular reflection light of the first illuminating light from the object; and a focusing unit focusing the specular reflection light on the imaging unit. The device is configured to inspect the image based on intensity of the specular reflection light received by the imaging unit. The first illuminating unit includes light-emitting elements and an illumination light producing unit that is configured to deflect light emitted from the light-emitting elements and thereby to produce the first illuminating light such that the specular reflection light from the object enters a pupil of the focusing unit.

In another aspect of this disclosure, there is provided a device for inspecting an image formed on an object. The device includes a first illuminating unit illuminating the object from an oblique direction with a first illuminating light; an imaging unit receiving specular reflection light of the first illuminating light from the object; and a focusing unit focusing the specular reflection light on the imaging unit. The device is configured to inspect the image based on intensity of the specular reflection light received by the imaging unit. The first illuminating unit includes light-emitting elements that are directed such that the specular reflection light from the object enters a pupil of the focusing unit.

### BRIEF DESCRIPTION OF THE DRAWINGS

FIG. 1 is a side view of a related-art image inspection device;
FIG. 2 is a front view of the related-art image inspection device of FIG. 1;
FIG. 3 is a side view of an image inspection device according to a first embodiment;
FIG. 4 is a front view of the image inspection device according to the first embodiment;
FIG. 5 is a perspective view of an illuminating unit according to the first embodiment;
FIG. 6 is a side view of an image inspection device according to a first variation of the first embodiment;
FIG. 7 is a front view of the image inspection device according to the first variation of the first embodiment;
FIG. 8 is a perspective view of an illuminating unit according to the first variation of the first embodiment;
FIG. 9 is a cut-away side view (1) of a light-emitting element of the illuminating unit according to the first variation of the first embodiment;
FIG. 10 is a cut-away side view (2) of a light-emitting element of the illuminating unit according to the first variation of the first embodiment;
FIG. 11 is a cut-away side view (3) of a light-emitting element of the illuminating unit according to the first variation of the first embodiment;
FIG. 12 is a drawing used to describe curvature of a curved mirror;
FIG. 13 is a plan view of an array of light-emitting elements of the illuminating unit according to the first variation of the first embodiment;
FIG. 14 is a front view of the array of light-emitting elements of the illuminating unit according to the first variation of the first embodiment;
FIG. 15 is a side view of an image inspection device according to a second variation of the first embodiment;
FIG. 16 is a perspective view of an illuminating unit and a condenser lens according to the second variation of the first embodiment;
FIG. 17 is a drawing illustrating an image inspection device according to a third variation of the first embodiment;
FIG. 18 is a graph showing exemplary data obtained by scanning a regular reflector with an image sensor; and
FIG. 19 is a schematic diagram of an image forming apparatus according to a second embodiment.

### DESCRIPTION OF THE PREFERRED EMBODIMENTS

With the technology disclosed in JP2006-284550, a two-dimensional gloss distribution of an object is obtained using a two-dimensional image sensor. However, since parallel light is used to illuminate the object, only the gloss distribution of a limited area of the object can be obtained at high resolution. That is, with a reduction optical system using a one-dimensional image sensor, the specular reflection light from the side edges of an object illuminated by parallel light does not enter the lens of the reduction optical system. For this reason, in JP2006-284550, a measuring device is mechanically moved to measure the entire area of an image. With this configuration, it is difficult to measure the gloss distribution of an output image at high speed.

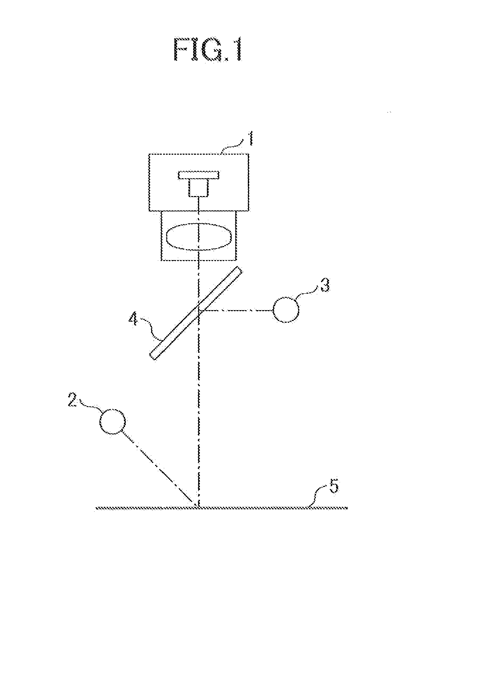

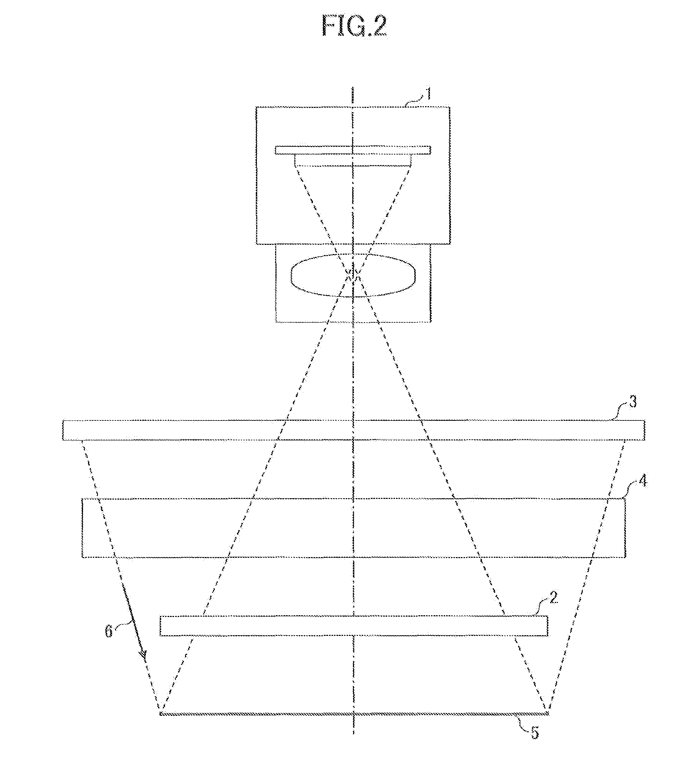

With the technology disclosed in JP2000-123152, it is possible to efficiently scan the entire area of an output image by scanning the output image in one direction with a line sensor. As illustrated in FIGs. 1 and 2, with the technology disclosed in JP2000-123152, illuminating light emitted from a line light source 3 for specular reflection is reflected by a half mirror 4 and reaches a printed matter 5. Then, specular reflection light from the printed matter 5 passes through the half mirror 4 and enters a camera 1. In this process, the intensity of the illuminating light is reduced to one half by the half mirror 4 and the specular reflection light is also reduced to one half by the half mirror 4.

With this configuration, as illustrated in FIG. 2, the side edges of the printed matter 5 need to be illuminated by edge-illuminating light 6 emitted from the ends of the line light source 3 to obtain specular reflection light from the side edges of the printed matter 5. Accordingly, the width of the line light source 3 needs to be far greater than the width of the printed matter 5. It is possible to reduce the width of the line light source 3 by positioning the half mirror 4 as close as possible to the printed matter 5. In this case, however, the half mirror 4 interferes with a line light source 2 for diffuse reflection.

Also, since the illuminating light emitted from the line light source 3 is not directional, the side edges of the printed matter 5 are also illuminated from directions other than the direction of the edge illuminating light 6. As a result, reflected light (diffuse reflection light of illuminating light from the other directions) other than the specular reflection light of the edge illuminating light 6 also enters the camera 1. This makes it difficult to accurately measure the gloss distribution.

Also, since the half mirror 4 is used in JP2000-123152, the intensity of light from the line light source 2 for diffuse reflection is reduced to one half and the intensity of light from the line light source 3 for specular reflection is reduced to one fourth. Thus, with the configuration of JP2000-123152, the use efficiency of light emitted from the light sources is low. Further, JP2000-123152 discloses a feature that "the line light source 3 illuminates the printed matter 5 via the half mirror 4 such that the optical axis of the illuminating light matches the optical axis of the camera 1", but does not provide specific examples or embodiments to implement this feature.

Thus, with the related-art technologies, it is difficult to obtain an accurate gloss distribution of the entire area of an object.

An aspect of this disclosure provides an image inspection device that can accurately measure the gloss distribution of the entire area of an object, and an image forming apparatus including the image inspection device.

Preferred embodiments of the present invention are described below with reference to the accompanying drawings. Throughout the accompanying drawings, the same reference numbers are used for the same components, and overlapping descriptions of those components are omitted.

### <FIRST EMBODIMENT>

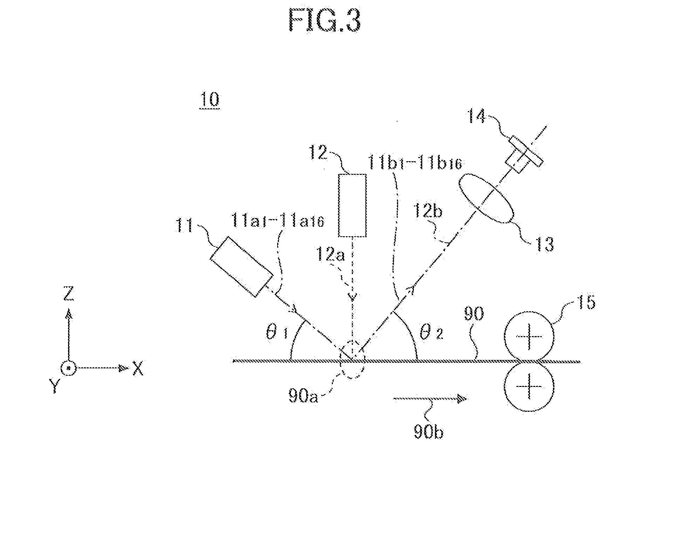

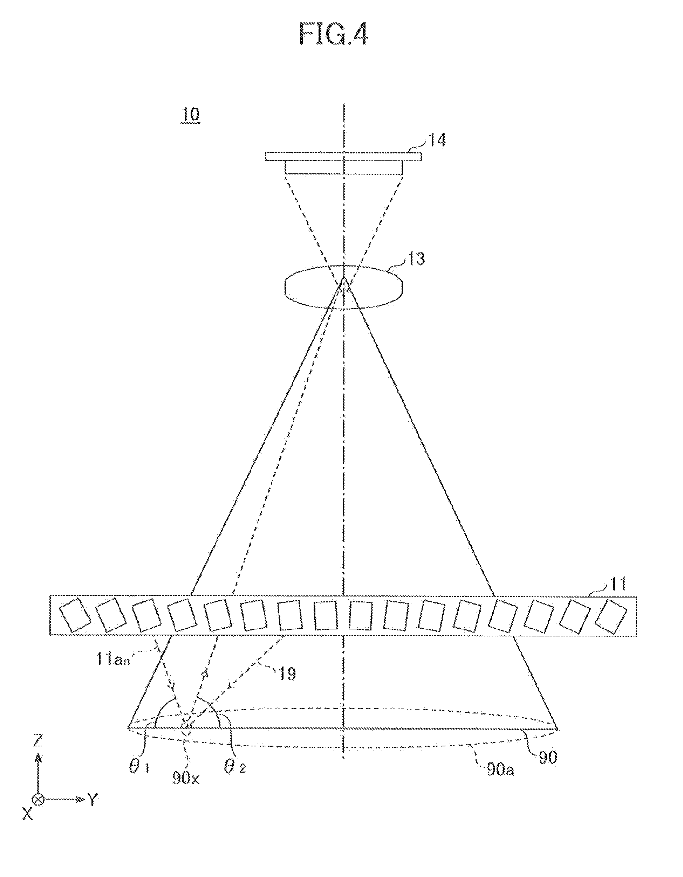

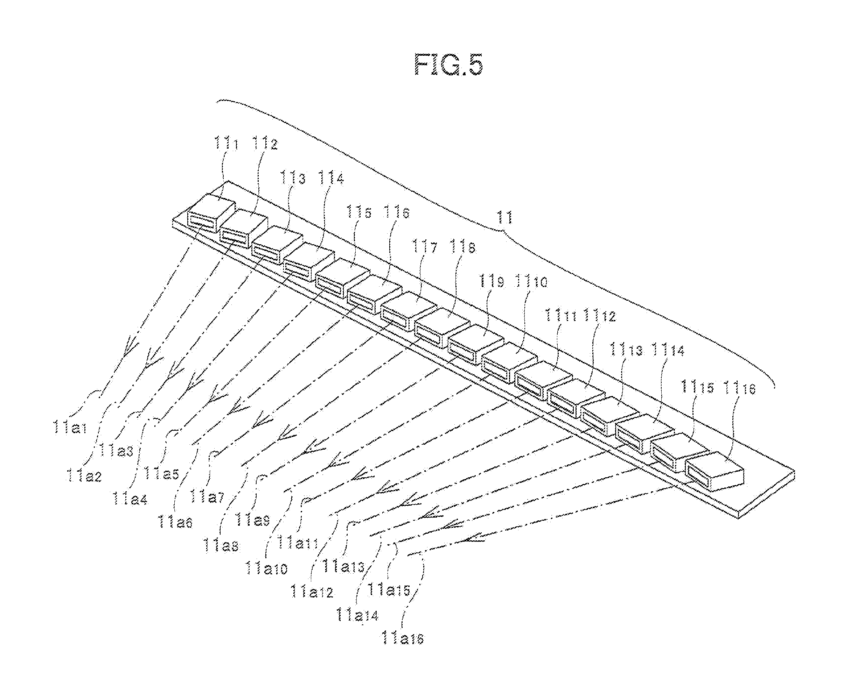

FIG. 3 is a side view of an image inspection device 10 according to a first embodiment. FIG. 4 is a front view of the image inspection device 10. FIG. 5 is a perspective view of an illuminating unit 11 according to the first embodiment. In FIG. 4, some of the components illustrated in FIG. 3 are omitted for brevity.

Referring to FIGs. 3, 4, and 5, the image inspection device 10 includes the illuminating unit 11 for obtaining the gloss distribution, an illuminating unit 12 for obtaining the density distribution, an imaging lens 13, an image sensor 14, and a feeding unit 15. Also in FIGs. 3 and 4, 90 indicates an image-carrying medium such as paper that is to be inspected, 90a indicates one line of scan area on the image-carrying medium 90, and 90b indicates a feeding direction in which the image-carrying medium 90 is to be fed.

In the descriptions below, specular reflection light indicates light reflected from the image-carrying medium 90 at the same angle as the incident angle of illuminating light emitted from the illuminating unit 11, and diffuse reflection light indicates reflected light other than the specular reflection light.

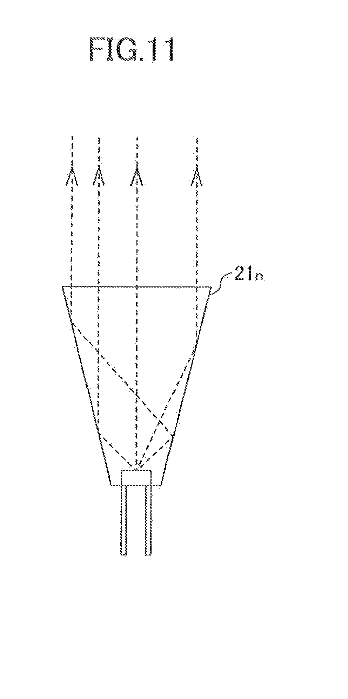

The illuminating unit 11 includes light-emitting elements 11₁ through 11₁₆. The light-emitting elements 11₁ through 11₁₆ emit illuminating lights 11a₁ through 11a₁₆ that enter the scan area 90a of the image-carrying medium 90 at an incident angle θ₁. In FIG. 3, 11b₁ through 11b₁₆ indicate specular reflection lights of the illuminating lights 11a₁ through 11a₁₆ entering the scan area 90a of the image-carrying medium 90 at the incident angle θ₁. A reflection angle of the specular reflection lights 11b₁ through 11b₁₆ is the same as the incident angle θ₁ of the illuminating lights 11a₁ through 11a₁₆. The light-emitting elements 11₁ through 11₁₆ are directed (or oriented) such that the specular reflection lights 11b₁ through 11b₁₆ from the scan area 90a of the image-carrying medium 90 enter the pupil of the imaging lens 13. In other words, the illuminating light 11a₁ through the illuminating light 11a₁₆ emitted from the light-emitting elements 11₁ through 11₁₆ are not parallel to each other.

The light-emitting elements 11₁ through 11₁₆ preferably have high directivity to reduce the emission of light in directions other than the predetermined directions. An image formed in the scan area 90a of the image-carrying medium 90 has an image density distribution in addition to a gloss distribution. Assuming that a portion 90x of the scan area 90a is to be illuminated by illuminating light 11aₙ (n=1-16) and flare light 19 indicates light from an unintended direction, a part of diffuse reflection light corresponding to the image density of the portion 90x illuminated by the flare light 19 enters the image sensor 14. As a result, the part of the diffuse reflection light is detected as a gloss component and reduces the inspection accuracy.

Thus, if the directivity of light-emitting elements is low, flare light (or illuminating light from an unintended direction) is produced and the inspection accuracy is reduced as in the related-art example illustrated in FIGs. 1 and 2. In this embodiment, highly-directional light-emitting elements are used as the light-emitting elements 11₁ through 11₁₆ to reduce flare light and to improve the inspection accuracy.

For example, light emitting diodes (LED) or organic electroluminescence (EL) elements may be used as the light-emitting elements 11₁ through 11₁₆. Compared with a fluorescent lamp, an LED has high light-emitting directivity and is therefore preferable for the illuminating unit 11. Although the illuminating unit 11 of this embodiment includes 16 light-emitting elements, the number of light-emitting elements is not limited to a specific value. The number of light-emitting elements is preferably large to densely arrange the light-emitting elements along the scan area 90a (in the direction Y in FIGs. 3 and 4) and thereby to properly illuminate the scan area 90a so that specular reflection light is obtained from the entire scan area 90a.

The illuminating unit 11 is an example of a first illuminating unit.

The illuminating unit 12 emits illuminating light 12a that enters the scan area 90a of the image-carrying medium 90 at a predetermined incident angle. The incident angle of the illuminating light 12a may be set at any angle that is different from the incident angle θ ₁. For example, the incident angle of the illuminating light 12a may be set at 90 degrees. As the illuminating light 12a, for example, a diffuse illumination device such as a xenon lamp or an LED array may be used. The image inspection device 10 is configured to not cause the illuminating unit 11 and the illuminating unit 12 to emit light at the same time. For example, the image inspection device 10 may be configured to cause the illuminating unit 11 and the illuminating unit 12 to alternately emit light or to emit light at different timings as needed. The illuminating unit 12 is an example of a second illuminating unit.

The imaging lens 13 and the image sensor 14 are positioned so as to be able to receive the specular reflection lights 11b₁ through 11b₁₆. Also, the imaging lens 13 and the image sensor 14 are positioned so as to be able to receive diffuse reflection light 12b that is a part of diffuse reflection light of the illuminating light 12a emitted from the illuminating unit 12 to the scan area 90a of the image-carrying medium 90. The imaging lens 13 may include multiple lenses and focuses the specular reflection lights 11b₁ through 11b₁₆ of the illuminating light 11a₁ through 11a₁₆ and the diffuse reflection light 12b of the illuminating light 12a on the image sensor 14. The imaging lens 13 is an example of a focusing unit.

The image sensor 14 includes multiple pixels and detects the intensities of the specular reflection lights 11b₁ through 11b₁₆ and the diffuse reflection light 12b that enter via the imaging lens 13. For example, a metal oxide semiconductor (MOS) device, a complimentary metal oxide semiconductor (CMOS) device, a charge coupled device (CCD), or a contact image sensor (CIS) may be used as the image sensor 14. In this embodiment, a one-dimensional image sensor is used as the image sensor 14. When a color image is to be inspected, a three-line image sensor that is sensitive to RGB color components may be used. The image sensor 14 is an example of an imaging unit.

The feeding unit 15 feeds the image-carrying medium 90 in the feeding direction 90b (or in the direction X in FIG. 3).

The image inspection device 10 measures the gloss distribution and the density distribution as described below. The image inspection device 10 turns on the illuminating unit 11 (the illuminating unit 12 is turned off) to illuminate the scan area 90a with the illuminating lights 11a₁ through 11a₁₆. The image sensor 14 detects the intensities of the specular reflection lights 11b₁ through 11b₁₆ from the scan area 90a. Then, the image inspection device 10 inspects the gloss distribution of the scan area 90a based on the intensities of the specular reflection lights 11b₁ through 11b₁₆. Next, the image inspection device 10 turns on the illuminating unit 12 (the illuminating unit 11 is turned off) to illuminate the scan area 90a with the illuminating light 12a. The image sensor 14 detects the intensity of the diffuse reflection light 12b from the scan area 90a. Then, the image inspection device 10 inspects the density distribution of the scan area 90a based on the intensity of the diffuse reflection light 12b. With the above process, the gloss distribution and the density distribution of one line (in one dimension) are obtained.

After the inspection of the gloss distribution and the density distribution of one line (in one dimension) is completed, the feeding unit 15 feeds the image-carrying medium 90 by a predetermined distance in the feeding direction 90b. Then, the above process is repeated for the next line (in one dimension). Thus, the image inspection device 10 repeats the above process to inspect the gloss distribution and the density distribution of the image-carrying medium 90 in two dimensions.

As described above, the image inspection device 10 of the first embodiment uses the illuminating unit 11 having high directivity to illuminate the scan area 90a such that specular reflection light from the entire scan area 90a enters the image sensor 14. This configuration makes it possible to reduce flare light and thereby makes it possible to accurately inspect the gloss distribution of the image-carrying medium 90. Also, the above configuration eliminates the need to provide an extra component such as a half mirror as disclosed in JP2000-123152. This in turn makes it easier to place the illuminating unit 2 for obtaining the density distribution in a desired position and makes it possible to inspect both the gloss distribution and the density distribution. Further, since the image inspection device 10 does not include a half mirror, it is possible to efficiently use light emitted from two illuminating units (the illuminating unit 11 and the illuminating unit 12).

If a diffuse illumination device such as a fluorescent lamp is used as in the related art, the amount of illuminating light for causing specular reflection light becomes relatively small at the side edges of the scan area 90a and the amount of flare light increases. As a result, the measured gloss distribution at the side edges of the scan area 90a is affected by the density level of the image-carrying medium 90. The first embodiment makes it possible to prevent this problem because the illuminating unit 11 illuminates the scan area 90a such that specular reflection light from the entire scan area 90a (including the side edges) enters the image sensor 14.

### <FIRST VARIATION OF FIRST EMBODIMENT>

In the image inspection device 10 of the first embodiment, the light-emitting elements 11₁ through 11₁₆ of the illuminating unit 11 are directed (or oriented) such that the specular reflection lights 11b₁ through 11b₁₆ from the scan area 90a enter the pupil of the imaging lens 13. In an image inspection device 20 of the first variation, the illuminating unit 11 is replaced with an illuminating unit 21 and a curved mirror 29 is added. The illuminating unit 21 includes light-emitting elements 21₁ through 21₁₆ that emit illuminating light 21a₁ through illuminating light 21a₁₆ that are substantially parallel to each other. The curved mirror 29 reflects and directs the substantially-parallel illuminating lights 21a₁ through 21a₁₆ to the scan area 90a such that specular reflection light from the entire scan area 90a enters the pupil of the imaging lens 13. Components of the image inspection device 20 other than the illuminating unit 21 and the curved mirror 29 have substantially the same configurations as those of the image inspection device 10, and therefore their descriptions are omitted here.

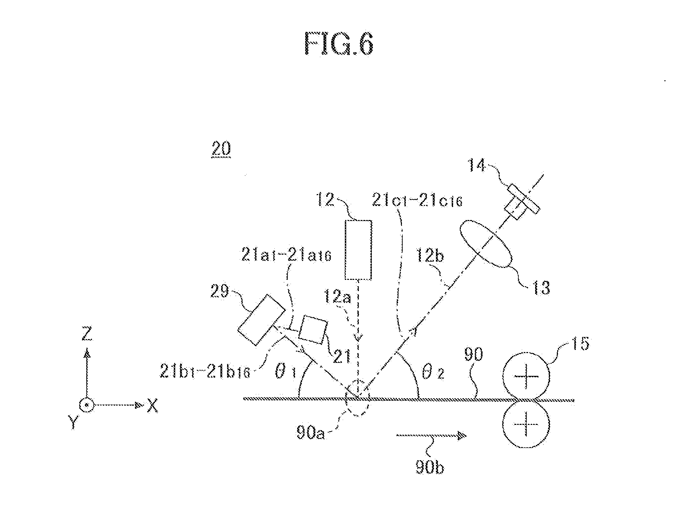

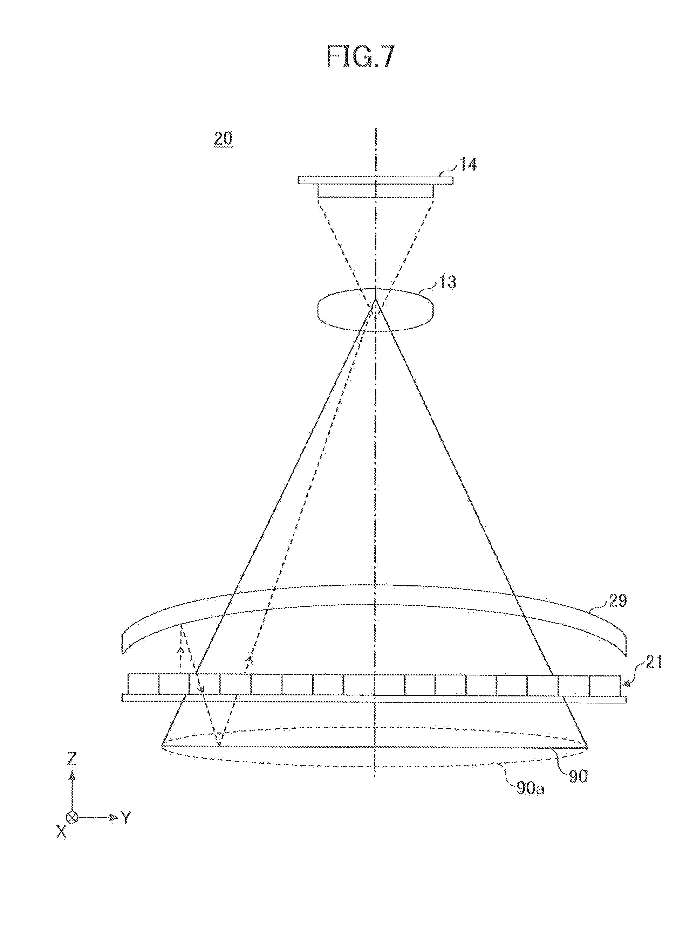

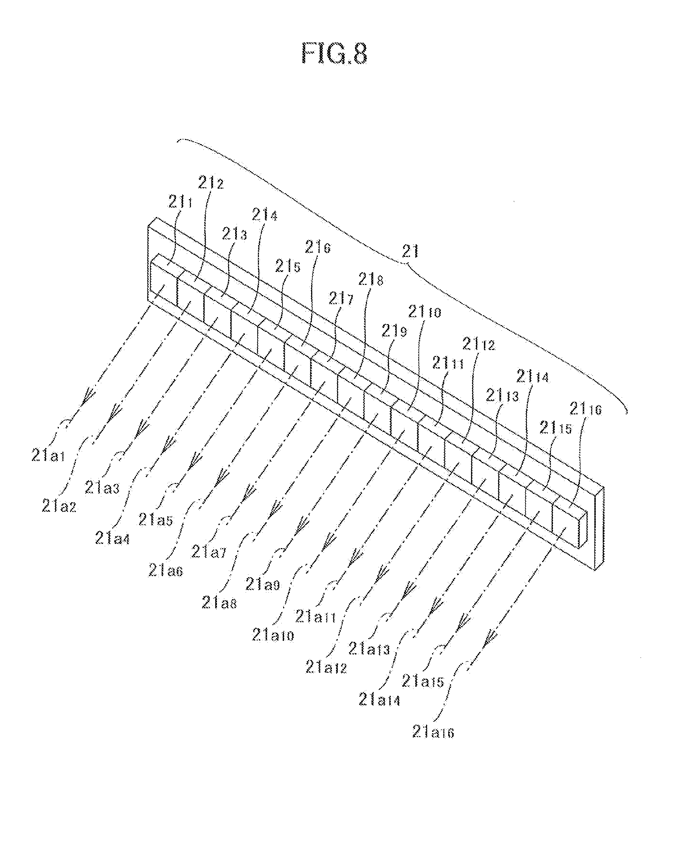

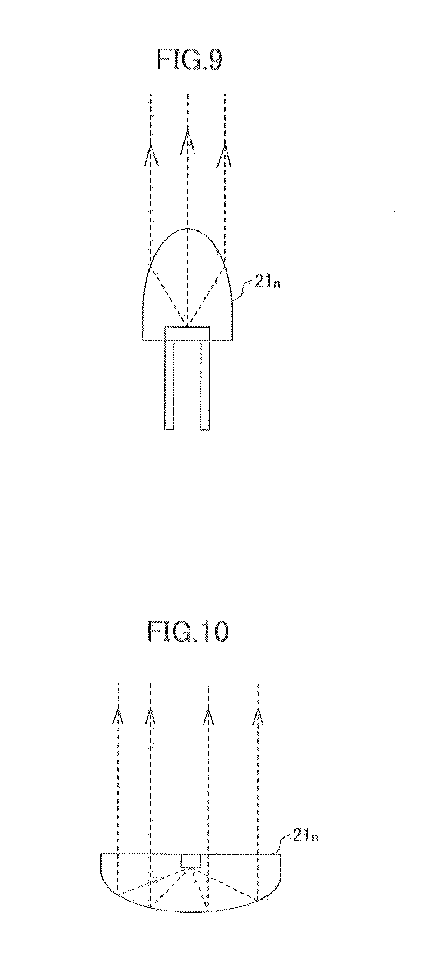

FIG. 6 is a side view of the image inspection device 20 according to the first variation of the first embodiment. FIG. 7 is a side view of the image inspection device 20. FIG. 8 is a perspective view of the illuminating unit 21. FIGs. 9 through 11 are cut-away side views of exemplary light-emitting elements of the illuminating unit 21. In FIG. 7, some of the components illustrated in FIG. 6 are omitted for brevity.

Referring to FIGs. 6 through 11, the image inspection device 20 includes the illuminating unit 21 for obtaining the gloss distribution, the illuminating unit 12 for obtaining the density distribution, the imaging lens 13, the image sensor 14, the feeding unit 15, and the curved mirror 29.

The light-emitting elements 21₁ through 21₁₆ (may be represented by "light-emitting element 21ₙ", n= 1-16) of the illuminating unit 21 emit the illuminating light 21a₁ through the illuminating light 21a₁₆ that are substantially parallel to each other and enter the curved mirror 29. For example, the light-emitting element 21ₙ may have a configuration where a lens is formed on an LED (see FIG. 9), a configuration where illuminating light from an LED is reflected by a parabolic mirror (see FIG. 10), or a configuration where illuminating light from an LED is repeatedly reflected by an inner surface of a horn-shaped (or trumpet-shaped) tube (or cylinder) to form substantially-parallel light (see FIG. 11). The illuminating unit 21 is formed by arranging the light-emitting elements 21ₙ in an array with no space between them. With this configuration, the illuminating unit 21 is able to emit substantially-parallel linear light. Accordingly, the illuminating unit 21 can emit substantially-parallel light from its entire light-emitting surface and therefore can continuously (from one end to the other) illuminate the entire scan area 90a.

Thus, the illuminating unit 21 is a parallel linear light source that emits substantially-parallel light from the light-emitting elements 21₁ through 21₁₆. Although the illuminating unit 21 of the first variation includes 16 light-emitting elements, the number of light-emitting elements is not limited to a specific value. The number of light-emitting elements is preferably large to densely arrange the light-emitting elements along the scan area 90a (in the direction Y in FIGs. 6 and 7) and thereby to evenly illuminate the scan area 90a so that specular reflection light is obtained from the entire scan area 90a.

The curved mirror 29 has a concave surface having predetermined curvature and extending along the length direction of the illuminating unit 21. The curved mirror 29 reflects (or deflects) the substantially-parallel illuminating lights 21a₁ through 21a₁₆ emitted from the light-emitting elements 21₁ through 21₁₆ to produce illuminating light 21b₁ through 21b₁₆ that illuminate the scan area 90a such that resulting specular reflection lights 21c₁ through 21c₁₆ from the scan area 90a enter the pupil of the imaging lens 13. The curvature of the concave surface of the curved mirror 29 is determined such that the specular reflection lights 21c₁ through 21c₁₆ of the illuminating lights 21b₁ through 21b₁₆ enter the pupil of the imaging lens 13.

The illuminating light 21a₁ through the illuminating light 21a₁₆ emitted from the light-emitting elements 21₁ through 21₁₆ of the illuminating unit 21 are reflected by the curved mirror 29 in different directions as the illuminating lights 21b₁ through 21b₁₆. The illuminating lights 21b₁ through 21b₁₆ enter the entire scan area 90a of the image-carrying medium 90 at an incident angle θ₁. Then, the illuminating lights 21b₁ through 21b₁₆ are reflected from the entire scan area 90a as the specular reflection lights 21c₁ through 21c₁₆. Then, the specular reflection lights 21c₁ through 21c₁₆ enter the pupil of the imaging lens 13. The combination of the illuminating unit 21 and the curved mirror 29 is an example of a first illuminating unit. Also, the curved mirror 29 is an example of an illuminating light producing unit.

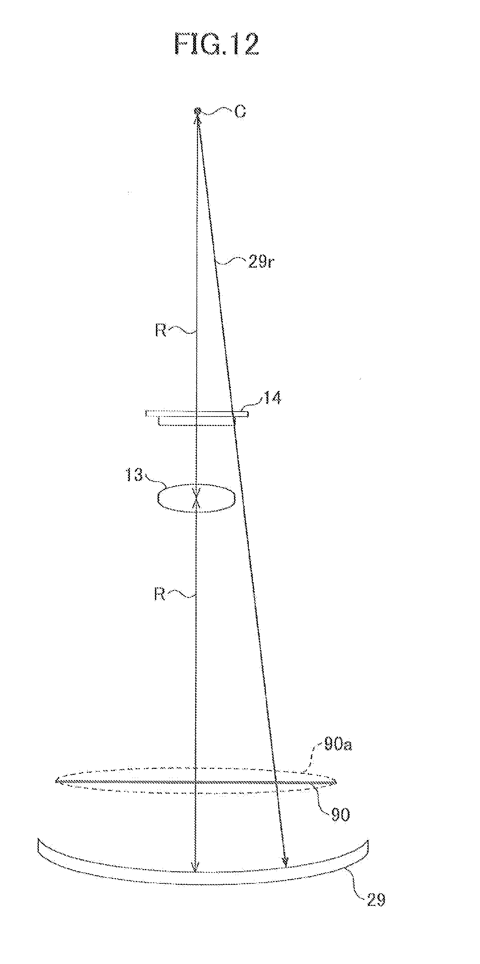

The curvature of the curved mirror 29 is described below with reference to FIG. 12. FIG. 12 is a drawing used to describe the curvature of the curved mirror 29. In FIG. 12, a distance R indicates the sum of the distance from the pupil of the imaging lens 13 to the scan area 90a and the distance from the scan area 90a to the curved mirror 29, and a center of curvature C indicates a position that is apart from the pupil of the imaging lens 13 by the distance R along the optical axis of the imaging lens 13. As illustrated in FIG. 12, a radius of curvature 29r of the curved mirror 29 is two times greater than the distance R. With this configuration, the substantially-parallel illuminating lights 21a₁ through 21a₁₆ emitted from the light-emitting elements 21₁ through 21₁₆ are reflected by the curved mirror 29 as the illuminating light 21b₁ through the illuminating light 21b₁₆ that are not parallel to each other. The illuminating lights 21b₁ through 21b₁₆ illuminate and are reflected by the entire scan area 90a as the specular reflection lights 21c₁ through 21c₁₆ that enter the pupil of the imaging lens 13.

The image inspection device 20 of the first variation has advantages similar to those of the image inspection device 10 of the first embodiment and also has advantages as described below. As described above, the image inspection device 20 of the first variation includes the illuminating unit 21 including the light-emitting elements 21₁ through 21₁₆ that emit the illuminating light 21a₁ through the illuminating light 21a₁₆ that are substantially parallel to each other; and the curved mirror 29 that reflects (or deflects) the illuminating lights 21a₁ through 21a₁₆ to illuminate the entire scan area 90a such that the specular reflection lights 21c₁ through 21c₁₆ from the entire scan area 90a enter the pupil of the imaging lens 13. This configuration makes it possible to substantially eliminate illuminating light that does not produce specular reflection light and to reduce components of light representing flare light, and thereby makes it possible to accurately inspect the gloss distribution.

Compared with the illuminating unit 11 of the image inspection device 10, the illuminating unit 21 and the curved mirror 29 of the image inspection device 20 can continuously illuminate the scan area 90a of the image-carrying medium 90 in the scanning direction. Thus, the image inspection device 20 can more accurately inspect the gloss distribution of the image-carrying medium 90.

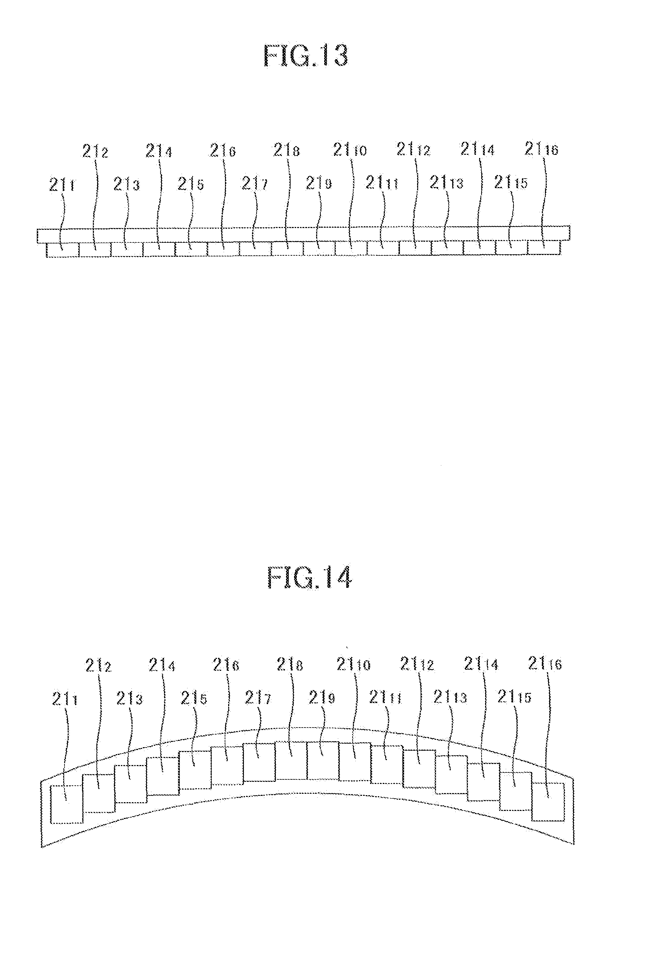

In FIG. 8, the light-emitting elements 21₁ through 21₁₆ are arranged in a line on a flat substrate. Alternatively, the light-emitting elements 21₁ through 21₁₆ may be arranged in a curved line (to form an arc) so that the illuminating light 21b₁ through the illuminating light 21b₁₆ are arranged in a line on the image-carrying medium 90 (see FIGs. 13 and 14). The curvature (or the shape) of the curved line (or the arc) formed by the light-emitting elements 21₁ through 21₁₆ may be determined according to the curvature of the curved mirror 29. In FIG. 14, the light-emitting elements 21₁ through 21₁₆ emit illuminating light in a direction that is perpendicular to the printed page.

### <SECOND VARIATION OF FIRST EMBODIMENT>

In the image inspection device 10 of the first embodiment, the light-emitting elements 11₁ through 11₁₆ of the illuminating unit 11 are directed (or oriented) such that the specular reflection lights 11b₁ through 11b₁₆ from the scan area 90a enter the pupil of the imaging lens 13. In an image inspection device 30 of the second variation, the illuminating unit 11 is replaced with an illuminating unit 31 and a condenser lens 39 is added. The illuminating unit 31 includes light-emitting elements 31₁ through 31₁₆ that emit illuminating light 31a₁ through illuminating light 31a₁₆ that are substantially parallel to each other. The condenser lens 39 causes the substantially-parallel illuminating lights 31a₁ through 31a₁₆ to illuminate the entire scan area 90a such that specular reflection light from the entire scan area 90a enters the pupil of the imaging lens 13. Components of the image inspection device 30 other than the illuminating unit 31 and the condenser lens 39 have substantially the same configurations as those of the image inspection device 10, and therefore their descriptions are omitted here.

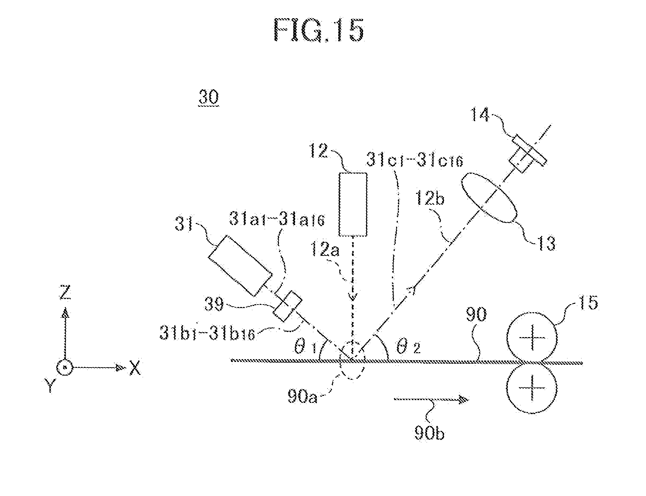

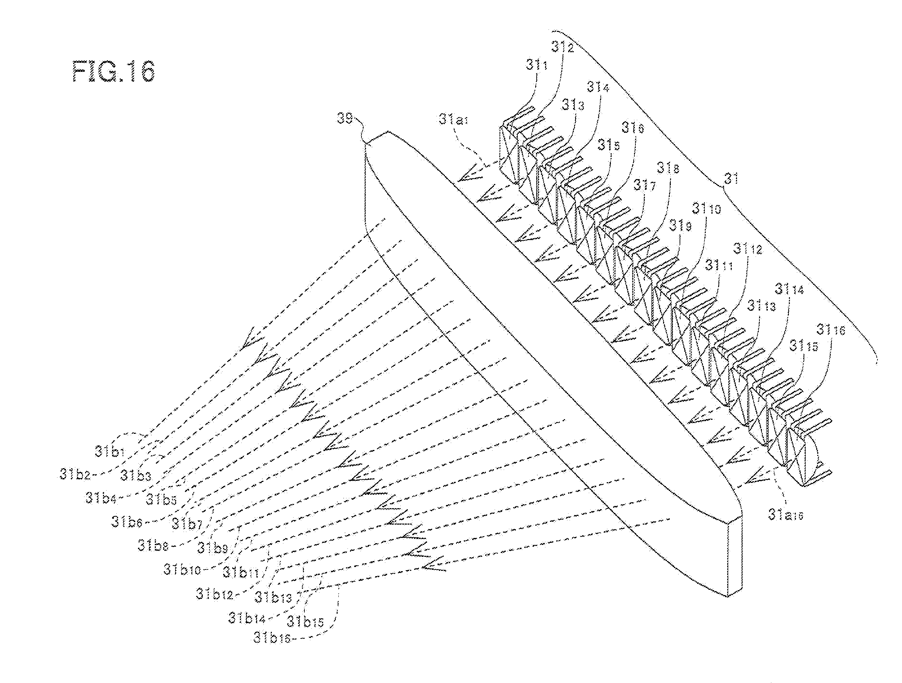

FIG. 15 is a side view of the image inspection device 30 according to the second variation of the first embodiment. FIG. 16 is a perspective view of the illuminating unit 31 and the condenser lens 39. Referring to FIGs. 15 and 16, the image inspection device 30 includes the illuminating unit 31 for obtaining the gloss distribution, the illuminating unit 12 for obtaining the density distribution, the imaging lens 13, the image sensor 14, the feeding unit 15, and the condenser lens 39.

The light-emitting elements 31₁ through 31₁₆ (may be represented by "light-emitting element 31ₙ", n= 1-16) of the illuminating unit 31 emit the illuminating light 31a₁ through the illuminating light 31a₁₆ that are substantially parallel to each other and enter the condenser lens 39. In FIG. 16, the reference numbers 31a₂ through 31a₁₅ are omitted for brevity.

For example, the light-emitting element 31ₙ may have a configuration where a lens is formed on an LED (see FIG. 9), a configuration where illuminating light from an LED is reflected by a parabolic mirror (see FIG. 10), or a configuration where illuminating light from an LED is repeatedly reflected by an inner surface of a horn-shaped (or trumpet-shaped) tube (or cylinder) to form substantially parallel light (see FIG. 11). The illuminating unit 31 is formed by arranging the light-emitting elements 31ₙ in an array with no space between them. With this configuration, the illuminating unit 21 is able to emit substantially-parallel linear light. Accordingly, the illuminating unit 31 can emit substantially-parallel light from its entire light-emitting surface and therefore can continuously (from one end to the other) illuminate the entire scan area 90a. The light-emitting elements 31ₙ are arranged in a line on a substrate.

Thus, the illuminating unit 31 is a parallel linear light source that emits substantially-parallel light from the light-emitting elements 31₁ through 31₁₆. Although the illuminating unit 31 of the second variation includes 16 light-emitting elements, the number of light-emitting elements is not limited to a specific value. The number of light-emitting elements is preferably large to densely arrange the light-emitting elements along the scan area 90a (in the direction Y in FIG. 15) and thereby to continuously illuminate the scan area 90a so that specular reflection light is obtained from the entire scan area 90a.

The condenser lens 39 has convex surfaces having predetermined curvature and extending along the length direction of the illuminating unit 31. The condenser lens 39 transmits and deflects the substantially-parallel illuminating lights 31a₁ through 31a₁₆ emitted from the light-emitting elements 31₁ through 31₁₆ to produce illuminating lights 31b₁ through 31b₁₆ that illuminate the scan area 90a such that resulting specular reflection lights 31c₁ through 31c₁₆ from the scan area 90a enter the pupil of the imaging lens 13. The curvature of the convex surfaces of the condenser lens 39 is determined such that the specular reflection lights 31c₁ through 31c₁₆ of the illuminating lights 31b₁ through 31b₁₆ enter the pupil of the imaging lens 13. In other words, the focus of the condenser lens 39 is at the pupil of the imaging lens 13.

In the example illustrated in FIG. 16, the condenser lens 39 is a double-convex lens having two convex surfaces. The curvature of each of the convex surfaces is determined such that the focus of the condenser lens 39 corresponds to the pupil of the imaging lens 13. Alternatively, any other appropriate lens such as a planoconvex lens or a convex meniscus lens may be used as the condenser lens 39. When monochromatic light is used as the illuminating light, the influence of chromatic aberration is small and therefore a planoconvex lens is preferably used as the condenser lens 39. Meanwhile, to achieve desired curvature with an inexpensive material having a low refractive index, a double-convex lens is preferably used as the condenser lens 39.

The illuminating light 31a₁ through the illuminating light 31a₁₆ emitted from the light-emitting elements 31₁ through 31₁₆ of the illuminating unit 31 are deflected by the condenser lens 39 in different directions as the illuminating lights 31b₁ through 31b₁₆. The illuminating lights 31b₁ through 31b₁₆ enter the entire scan area 90a of the image-carrying medium 90 at an incident angle θ₁. Then, the illuminating lights 31b₁ through 31b₁₆ are reflected from the entire scan area 90a as the specular reflection lights 31c₁ through 31c₁₆. Then, the specular reflection lights 31c₁ through 31c₁₆ enter the pupil of the imaging lens 13. The combination of the illuminating unit 31 and the condenser lens 39 is an example of a first illuminating unit. Also, the condenser lens 39 is an example of an illuminating light producing unit.

The image inspection device 30 of the second variation has advantages similar to those of the image inspection device 10 of the first embodiment and also has advantages as described below. As described above, the image inspection device 30 of the second variation includes the illuminating unit 31 including the light-emitting elements 31₁ through 31₁₆ that emit the illuminating light 31a₁ through the illuminating light 31a₁₆ that are substantially parallel to each other; and the condenser lens 39 that deflects the illuminating lights 31a₁ through 31a₁₆ to illuminate the scan area 90a such that the resulting specular reflection lights 31c₁ through 31c₁₆ from the entire scan area 90a enter the pupil of the imaging lens 13. This configuration makes it possible to substantially eliminate illuminating light that does not produce specular reflection light and to reduce components of light representing flare light, and thereby makes it possible to accurately inspect the gloss distribution.

Compared with the illuminating unit 11 of the image inspection device 10, the illuminating unit 31 and the condenser lens 39 of the image inspection device 30 can continuously illuminate the scan area 90a of the image-carrying medium 90 in the scanning direction. Thus, the image inspection device 30 can more accurately inspect the gloss distribution of the image-carrying medium 90.

The image inspection device 20 of the first variation of the first embodiment uses the curved mirror 29 to deflect (or change the path of) the illuminating light, and the curved mirror 29 can be implemented by a reflection mirror made of an inexpensive material such as high-gloss aluminum. This configuration makes it easier to downsize and reduce the costs of an image inspection device. Meanwhile, the image inspection device 30 of the second variation of the first embodiment uses the condenser lens 39 that is more expensive than the curved mirror 29. However, unlike a free-form surface that is formed by bending a material, the condenser lens 39 can be optimally designed to achieve a desired performance.

### <THIRD VARIATION OF FIRST EMBODIMENT>

The first embodiment provides the image inspection device 10 that can accurately inspect the gloss distribution of the image-carrying medium 90. Still, there may be a case where the illuminating unit 11 of the image inspection device 10 cannot evenly illuminate the entire scan area 90a. A third variation of the first embodiment provides an image inspection device 40 including a blind area processing unit 45 that performs a process in a case where the illuminating unit 11 of the image inspection device 10 cannot evenly illuminate the entire scan area 90a.

For example, if there is a gap between the light-emitting elements 11₁ through 11₁₆ or if the effective light-emitting surface of the light-emitting elements 11₁ through 11₁₆ is smaller than their size, the illuminating unit 11 may not be able to evenly illuminate the entire scan area 90a. In such a case, there is a portion in the scan area 90a which is not illuminated by any one of the illuminating light 11a₁ through the illuminating light 11a₁₆. This portion is called a blind area where specular reflection light is not produced and the gloss cannot be measured. The blind area processing unit 45 of the image inspection device 40 performs a process related to the blind area.

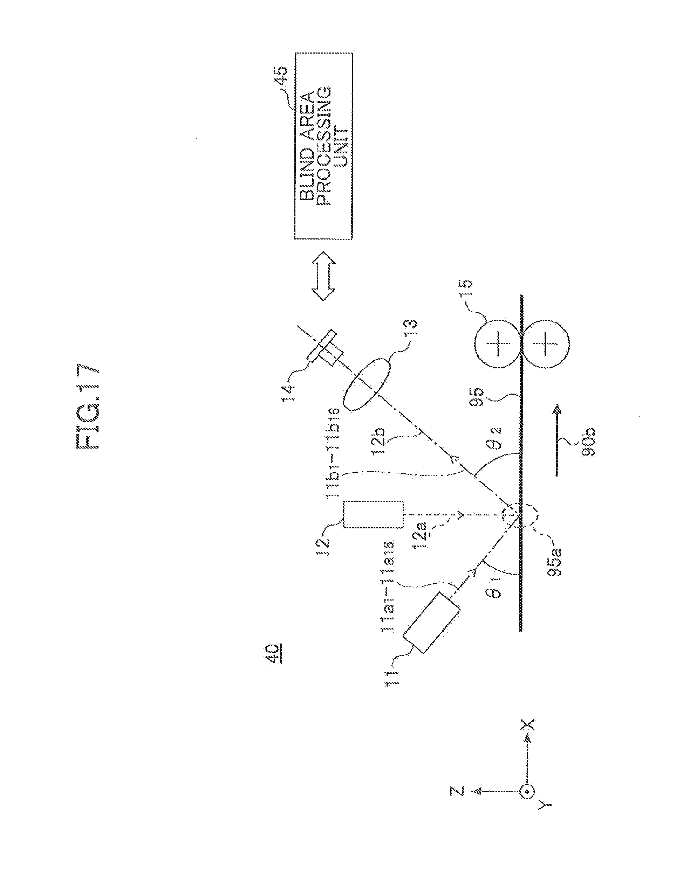

FIG. 17 is a drawing illustrating the image inspection device 40 according to the third variation of the first embodiment. As illustrated in FIG. 17, the image inspection device 40 includes the blind area processing unit 45 in addition to the components of the image inspection device 10 of the first embodiment. The blind area processing unit 45 includes a CPU and a memory such as a ROM or a RAM that are not shown. The memory of the blind area processing unit 45 stores a program for causing the image inspection device 40 to identify a blind area(s) and to prevent the image inspection device 40 from inspecting the gloss of the blind area(s). The program is executed by the CPU to implement various functions of the blind area processing unit 45.

An exemplary process performed by the blind area processing unit 45 is described below. In a first step, the blind area processing unit 45 identifies blind areas and stores information indicating the identified blind areas in the memory. An exemplary method for identifying blind areas is described below. First, the blind area processing unit 45 causes the feeding unit 15 to feed a specular reflector 95. For example, a mirror or a polished metal plate that can specularly reflect illuminating light in its entire area may be used as the specular reflector 95. Next, the blind area processing unit 45 causes the illuminating unit 11 to illuminate one line of scan area (scan area 95a) of the specular reflector 95 with the illuminating lights 11a₁ through 11a₁₆ and causes the image sensor 14 to detect the resulting specular reflection lights 11b₁ through 11b₁₆ from the scan area 95a.

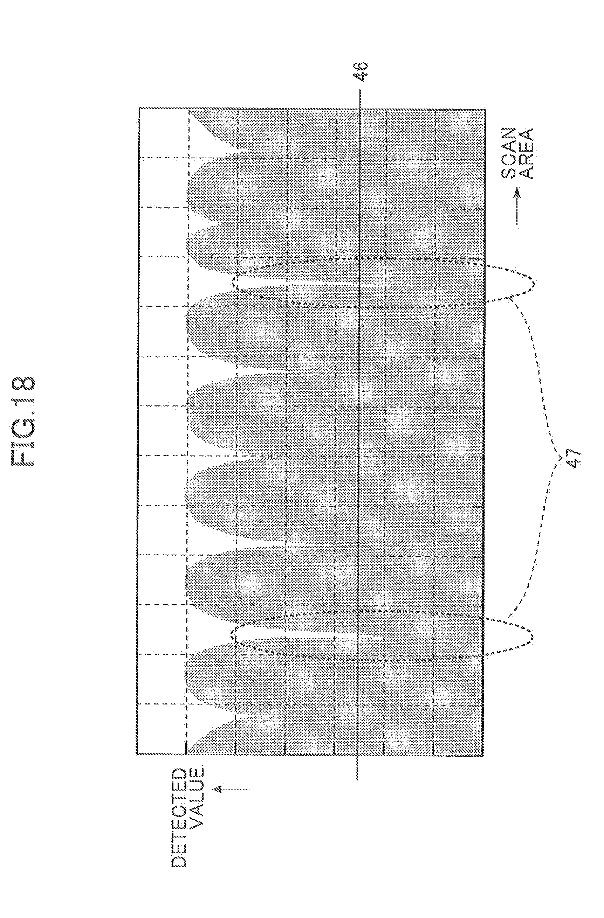

FIG. 18 is a graph showing exemplary data obtained by scanning the regular reflector 95 with the image sensor 14. In FIG. 18, the horizontal axis indicates the scan area 95a and the vertical axis indicates a detected value detected by the image sensor 14. As the intensity of light entering the image sensor 14 increases, the detected value increases (i.e., the position of the detected value in the graph becomes higher). The blind area processing unit 45 compares the detected value with a predetermined threshold 46 and if the detected value of a portion (or a point) of the scan area 95a is less than or equal to the threshold 46, identifies the portion as a blind area 47. After the above process is completed for one line (in one dimension), the blind area processing unit 45 causes the feeding unit 15 to feed the specular reflector 95 by a predetermined distance in the feeding direction 90b. Then, the blind area processing unit 45 repeats the above process for the next line (in one dimension). Thus, the blind area processing unit 45 repeats the above process to identify blind areas 47 in two dimensions.

In a second step, the blind area processing unit 45 obtains gloss data indicating the gloss of the image-carrying medium 90 that is fed by the feeding unit 15. In a third step, the blind area processing unit 45 removes data corresponding to the blind areas 47 from the gloss data obtained in the second step. Thus, the blind area processing unit 45 obtains "effective" gloss data not including data corresponding to the blind areas 47 through the first through third steps described above. Alternatively, the blind area processing unit 45 may be configured to not obtain gloss data of the blind areas 47 instead of removing the data corresponding to the blind areas 47 from the gloss data of the entire image-carrying medium 90.

The image inspection device 40 of the third variation has advantages similar to those of the image inspection device 10 of the first embodiment and also has advantages as described below. The image inspection device 40 including the blind area processing unit 45 makes it possible to accurately inspect the gloss distribution by excluding gloss data corresponding to the blind areas 47 even when the illuminating unit 11 cannot evenly illuminate the entire scan area 90a.

### <SECOND EMBODIMENT>

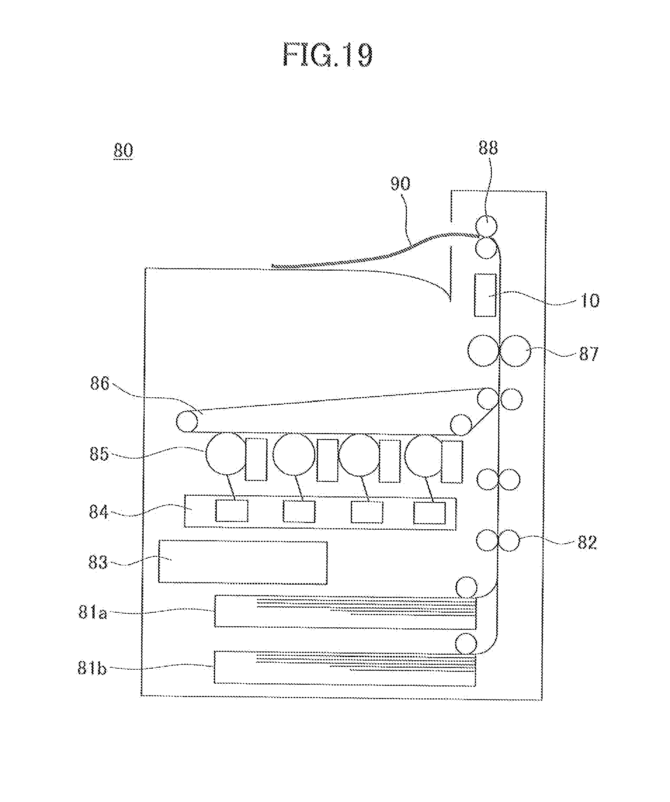

A second embodiment provides an image forming apparatus including the image inspection device 10, 20, 30, or 40 of the first embodiment. FIG. 19 is a schematic diagram of an image forming apparatus 80 according to the second embodiment. As illustrated in FIG. 19, the image forming apparatus 80 includes the image inspection device 10, a paper-feed cassette 81a, a paper-feed cassette 81b, paper feeding rollers 82, a controller 83, an optical scanning system 84, photoconductors 85, an intermediate transfer part 86, fusing rollers 87, and paper ejecting rollers 88. In FIG. 19, 90 indicates an image-carrying medium such as paper.

In the image forming apparatus 80, the image-carrying medium 90 is fed from the paper-feed cassette 81a or 81b via a guide and the paper feeding rollers 82 to the intermediate transfer part 86. The photoconductors 85 are exposed by the optical scanning system 84 to form latent images and the latent images are developed with color materials (e.g., toner). The developed images are transferred onto and superposed on the intermediate transfer part 86, and the superposed image is transferred from the intermediate transfer part 86 onto the image-carrying medium 90. The superposed image on the image-carrying medium 90 is fused by the fusing rollers 87 and the image-carry medium 90 with the fused image is ejected by the ejecting rollers 88. The image inspection device 10 is disposed downstream of the fusing rollers 87.

Thus, in the image forming apparatus 80 of the second embodiment, the image inspection device 10 is disposed in a predetermined position to inspect the gloss distribution as well as the density distribution of the image-carrying medium 90. The inspection results of the gloss distribution and the density distribution may be fed back, for example, to the controller 83 to improve the quality of an image to be formed on the image-carrying medium 90.

The image inspection device 10 of the image forming apparatus 80 may be replaced with the image inspection device 20, 30, or 40.

The present invention is not limited to the specifically disclosed embodiments, and variations and modifications may be made without departing from the scope of the present invention.

## Claims

1. A device for inspecting an image formed on an object, the device comprising:
a first illuminating unit illuminating the object from an oblique direction with a first illuminating light;
an imaging unit receiving specular reflection light of the first illuminating light from the object; and
a focusing unit focusing the specular reflection light on the imaging unit, wherein
the device is configured to inspect the image based on intensity of the specular reflection light received by the imaging unit;
the first illuminating unit includes light-emitting elements; and
the light-emitting elements are directed such that the specular reflection light from the object enters a pupil of the focusing unit.

2. The device as claimed in claim 1, the first illuminating unit further includes an illumination light producing unit configured to deflect light emitted from the light-emitting elements and thereby to produce the first illuminating light such that the specular reflection light from the object enters the pupil of the focusing unit.

3. The device as claimed in claim 2, wherein the illumination light producing unit has a concave surface that reflects the light emitted from the light-emitting elements such that the reflected light enters the object from the oblique direction; and
a curvature of the concave surface is determined such that the specular reflection light enters the pupil of the focusing unit.

4. The device as claimed in claim 2, wherein the illumination light producing unit has a convex surface that transmits and causes the light emitted from the light-emitting elements to enter the object from the oblique direction; and
a curvature of the convex surface is determined such that the specular reflection light enters the pupil of the focusing unit.

5. The device as claimed in any one of claims 1 through 4, further comprising:
a blind area processing unit identifying a blind area where the specular reflection light is not produced based on intensity of specular reflection light from a specular reflector illuminated by the first illuminating light.

6. The device as claimed in claim 5, wherein the blind area processing unit inspects the image based on the intensity of the specular reflection light from areas of the object other than the blind area.

7. The device as claimed in any one of claims 1 through 6, wherein the device is configured to inspect a gloss distribution of the object based on the intensity of the specular reflection light received by the imaging unit.

8. The device as claimed in any one of claims 1 through 7, further comprising:
a second illuminating unit illuminating the object with a second illuminating light from a direction different from the first illuminating unit, wherein
the imaging unit is configured to also receive a part of diffuse reflection light of the second illuminating light from the object;
the focusing unit is configured to also focus the part of the diffuse reflection light on the imaging unit; and
the device is configured to inspect a density distribution of the object based on intensity of the part of the diffuse reflection light when the first illuminating unit is turned off and the second illuminating unit is turned on.

9. An apparatus for forming an image on an image-carrying medium, the apparatus comprising:
the device of any one of claims 1 through 8 configured to inspect one or both of a gloss distribution and a density distribution of the image-carrying medium on which the image is formed.
